# EUROPÄISCHE PATENTANMELDUNG

(11) **EP 4 797 333 A1**
(43) Veröffentlichungstag der Anmeldung: **26.08.2026**
(21) Anmeldenummer: 25158745.7
(22) Anmeldetag: 19.02.2025
(51) Int. Cl.: H01M 4/04, H01M 10/04, H01M 10/0525

(54) **MARKIERUNG VON BAHNABSCHNITTEN EINER MATERIALBAHN IN EINEM BATTERIEZELLENHERSTELLUNGSPROZESS**

(71) Anmelder: Siemens Aktiengesellschaft, 80333 München (DE); Friedrich-Alexander-Universität Erlangen-Nürnberg, in Vertretung des Freistaates Bayern, 91054 Erlangen (DE)
(72) Erfinder: BALDAUF, Manfred, 91056 Erlangen (DE); GRÖGER, Andreas, 81735 München (DE); MANDEL, Karl, 97261 Güntersleben (DE); MÜSSIG, Stephan, 91052 Erlangen (DE)
(74) Vertreter: Siemens Patent Attorneys

(57) **Zusammenfassung**

Die vorliegende Erfindung betrifft ein Verfahren zur Markierung von Bahnabschnitten einer Materialbahn in einem Batteriezellenherstellungsprozess sowie eine zugehörige Markierungsvorrichtung und eine Vorrichtung zum Ermitteln von bei einem nach einem der vorstehenden Ansprüche markierten Bahnabschnitt vorgelegenen Prozessparametern.

Das Verfahren zur Markierung von Bahnabschnitten einer Materialbahn in einem Batteriezellenherstellungsprozess weist die folgenden Schritte auf:
- Bereitstellen einer Anzahl an Suprapartikeln, wobei die jeweiligen Suprapartikel ein definiertes und für das jeweilige Suprapartikel charakteristisches magnetisches Moment als Funktion einer Anregungsfrequenz aufweisen abhängig von einer chemischen Zusammensetzung von in dem jeweiligen Suprapartikel enthaltenen Nanopartikeln,
- Aufbringen der bereitgestellten Anzahl an Suprapartikeln auf die Materialbahn, wobei die Suprapartikel oder mehrere Suprapartikelcluster bestehend aus mehreren, verschiedenen Suprapartikeln der bereitgestellten Anzahl an Suprapartikeln in einem vorgebbaren Abstand aufgebracht werden,
- Bereitstellen einer jeweiligen Zuordnung des magnetischen Moments als Funktion der Anregungsfrequenz zu dem jeweiligen Suprapartikel oder einer jeweiligen Zuordnung magnetischer Momente als Funktion der Anregungsfrequenz zu dem jeweiligen Suprapartikelcluster,
- Hinterlegen eines Zeitstempels zugehörig zu den aufgebrachten Suprapartikeln oder Suprapartikelclustern.

## Beschreibung

Die vorliegende Erfindung betrifft ein Verfahren zur Markierung von Bahnabschnitten einer Materialbahn in einem Batteriezellenherstellungsprozess sowie eine zugehörige Markierungsvorrichtung und eine Vorrichtung zum Ermitteln von bei einem nach einem der vorstehenden Ansprüche markierten Bahnabschnitt vorgelegenen Prozessparametern.

Bei der Herstellung von Batteriezellen wie beispielsweise Zellen für Lithium-Ionen-Batterien, Natrium-Ionen oder Festkörperbatterien, werden kontinuierliche Produktionsschritte mit diskreten Schritten kombiniert. Ein gängiges Verfahren ist das Rolle-zu-Rolle-Verfahren, bei dem eine aufgerollte Folie, die mehrere Hundert Meter lang sein kann, abgerollt, prozessiert und dann wieder aufgerollt wird. Beispiele für diese Prozessschritte sind die Beschichtung von Ableiterfolien mit Elektrodenmaterialslurry, das Trocknen der Beschichtung und das Kalandrieren. Anschließend werden die wieder aufgerollten Bahnen an einer anderen Station vereinzelt, d.h. in kleine Blätter oder Bahnen mit geringeren Abmessungen zerschnitten. Darauf folgen diskrete Prozesse wie das periodische Stapeln von Kathode, Diaphragma und Anode sowie das Einbringen in ein Zellgehäuse oder eine umhüllende Folie.

Ein wesentliches Problem in der großtechnischen Produktion ist die hohe Ausschussquote, die bei der end-of-line-Qualitätskontrolle festgestellt wird. Die Ursachen für die schlechte Qualität einiger Zellen sind meist unbekannt und können nicht mit den Prozessparametern der vorgelagerten Prozessschritte korreliert werden. Daher ist es für die Ursachenaufklärung bei schlechten Zellen sehr wichtig, dass im Nachhinein nachvollziehbar ist, welche Abschnitte der ursprünglichen Elektrodenrolle nach dem Vereinzeln in welchen der vielen tausend Batteriezellen verbaut wurden.

Herkömmliche Methoden zur Markierung von Bahnabschnitten nutzen aufgedruckte oder mittels Laser aufgebrachte Markierungen wie beispielsweise QR-Codes sowie mechanische Markierungen durch Prägen. Ferner werden optisch aufzeichenbare Merkmale der Oberflächenbeschichtung genutzt.

Vor diesem Hintergrund ist es eine Aufgabe der vorliegenden Erfindung, ein verbessertes Verfahren zur Identifikation und Rückverfolgbarkeit von Elektrodenbahnabschnitten bereitzustellen. Dabei sollen die Beschichtung der Elektroden nicht beschädigt werden und auch in späteren Fertigungsschritten zuverlässig erkannt werden können. Zudem soll das Verfahren eine hohe Effizienz und Kosteneffektivität bieten, um in der großtechnischen Produktion anwendbar zu sein.

Unabhängig vom grammatikalischen Geschlecht eines bestimmten Begriffes sind Personen mit männlicher, weiblicher oder anderer Geschlechteridentität mit umfasst.

Die Erfindung betrifft ein Verfahren zur Markierung von Bahnabschnitten einer Materialbahn in einem Batteriezellenherstellungsprozess, aufweisend die folgenden Schritte:
- Bereitstellen einer Anzahl an Suprapartikeln, wobei die jeweiligen Suprapartikel ein definiertes und für das jeweilige Suprapartikel charakteristisches magnetisches Moment als Funktion einer Anregungsfrequenz aufweisen abhängig von einer chemischen Zusammensetzung von in dem jeweiligen Suprapartikel enthaltenen Nanopartikeln,
- Aufbringen der bereitgestellten Anzahl an Suprapartikeln auf die Materialbahn, wobei die Suprapartikel oder mehrere Suprapartikelcluster bestehend aus mehreren Suprapartikeln der bereitgestellten Anzahl an Suprapartikeln in einem vorgebbaren Abstand aufgebracht werden,
- Bereitstellen einer jeweiligen Zuordnung des magnetischen Moments als Funktion der Anregungsfrequenz zu dem jeweiligen Suprapartikel oder einer jeweiligen Zuordnung magnetischer Momente als Funktion der Anregungsfrequenz zu dem jeweiligen Suprapartikelcluster,
- Hinterlegen eines Zeitstempels zugehörig zu den aufgebrachten Suprapartikeln oder Suprapartikelclustern.

Insbesondere betrifft das Verfahren den Herstellungsprozess von Batteriezellen wie beispielsweise Zellen für Lithium-Ionen-Batterien. Die Materialbahn ist beispielsweise die Elektrodenbahn oder eine Separatorbahn oder eine Bahn mit vergleichbarer Funktionalität, die im Batterieherstellungsprozess kontinuierlich verarbeitet wird. Beispielsweise wird das Verfahren bei mehreren in einem Batterieherstellungsprozess eingesetzten Bahnen angewendet. Ein Bahnabschnitt einer Materialbahn ist ein beliebiger räumlicher Abschnitt einer Bahn, der nicht extra gekennzeichnet oder vorbereitet sein muss.

Das magnetische Moment eines Suprapartikels ist für das jeweilige Suprapartikel charakteristisch und beispielsweise bekannt. Es ist abhängig von einer Anregungsfrequenz und wird durch Beaufschlagen mit der Anregungsfrequenz beispielsweise mittels eines Magnet-Partikel-Spektroskopieverfahrens ermittelt. Charakteristisch wird das Suprapartikel anhand seiner magnetischen Eigenschaften insbesondere abhängig von einer chemischen Zusammensetzung von in dem jeweiligen Suprapartikel enthaltenen Nanopartikeln.

Suprapartikel werden aus Nanopartikeln aufgebaut, die insbesondere kolloidal dispergiert sind und die aus sehr unterschiedlichen Materialklassen stammen können, wie beispielsweise Übergangsmetallen, Edelmetallen oder Siliziumoxid. Suprapartikel werden beispielsweise in dispergierter Form bereitgestellt, beispielsweise als Kolloid, Pulver oder Mikrokomposit. Dies unterscheidet sie von Nanopartikel-Anordnungen, die in einer, zwei oder drei Dimensionen unendlich ausgedehnt sind. Insbesondere herrscht bei den bereitgestellten Suprapartikeln ein konsistentes Strukturmotiv vor, wie beispielsweise das einer Kristallpackung, fraktalen Dimension oder Konnektivität zum nächsten Nachbarn, definierten Durchschnittsgröße oder -form. Dies führt zur Schaffung zusätzlicher Funktionen wie insbesondere Kopplung, Emergenz oder Kolokalisierung.

Die Eigenschaften von Suprapartikeln können gezielt modifiziert werden. Die interessierende Eigenschaft ist beispielsweise das magnetische Verhalten, das von der chemischen Zusammensetzung der gewählten Nanopartikel abhängt.

Die Suprapartikel werden beispielsweise laufend bereitgestellt oder als Vorrat regelmäßig angelegt und dann eingesetzt. Die so bereitgestellten und verwendbaren Suprapartikel werden in einem vorgebbaren Abstand aufgebracht. Dieser ist beispielsweise je Herstellungsverfahren fest und unveränderlich. Beispielsweise wird ein Suprapartikel zu einem vorgebbaren Zeitpunkt und somit in zeitlichen Abständen zu zuvor und danach aufgebrachten Suprapartikeln aufgebracht. Ein räumlicher Abstand zu einem benachbarten Suprapartikel ergibt sich aufgrund einer Prozessgeschwindigkeit des Herstellungsprozesses.

Beispielsweise werden aus der bereitgestellten Anzahl an Suprapartikeln Suprapartikelcluster durch Kombination einzelner Suprapartikel gebildet und diese Suprapartikelcluster aufgebracht. Beispielsweise steht nur eine geringe Anzahl, insbesondere weniger als 50, insbesondere weniger als 10, Suprapartikel mit jeweils individuellen magnetischen Eigenschaften bereit und durch Kombination dieser Suprapartikel und Aufbringen in einem räumlich vorgegebenen Muster, insbesondere einer steuerbaren Reihenfolge, wird ein wiederauffindbarer Suprapartikelcluster gebildet. Die Suprapartikelcluster werden wiederum in zeitlichem Abstand zueinander aufgebracht, sodass zu einem aufgebrachten Suprapartikelcluster ein Zeitpunkt eines Aufbringens ermittelbar ist. Benachbarte Suprapartikelcluster liegen somit in einem räumlichen Abstand, der durch die Prozessgeschwindigkeit des Herstellungsprozesses vorgegeben ist.

Das magnetische Moment, das in speziellen Verfahren, beispielsweise mittels Magnet Partikel Spektroskopieverfahren, je Suprapartikel ermittelbar ist, wird beispielsweise vorab ermittelt, indem die Suprapartikel oder Suprapartikelcluster vermessen werden. Es erfolgt eine Zuordnung des magnetischen Moments als Funktion der Anregungsfrequenz zu dem jeweiligen Suprapartikel oder eine jeweilige Zuordnung magnetischer Momente als Funktion der Anregungsfrequenz zu dem jeweiligen Suprapartikelcluster. Beispielsweise wird diese Zuordnung in einer Datenbank hinterlegt. Die Suprapartikel werden beispielsweise gemeinsam mit der Information über ihre bekannte magnetische Charakteristik von einem Zulieferer, beispielsweise von einem Chemiehersteller o.ä., geliefert. Für eine gewählte Anregungsfrequenz ist so mittels dieser ersten Datenbank nachvollziehbar, welches magnetische Moment zu welchem Suprapartikel gehört, oder welche Kombination aus magnetischen Momenten im Falle der Cluster zu welchem Suprapartikelcluster gehört.

Ein Zeitstempel wird ebenfalls je aufgebrachtem Suprapartikel oder Suprapartikelcluster hinterlegt ist, beispielsweise in einer zweiten Datenbank. Der Zeitstempel je aufgebrachtem Suprapartikel oder Suprapartikelcluster wird beispielsweise ebenfalls in der ersten Datenbank hinterlegt oder die Datenbanken werden ineinander integriert.

Somit ist bei einem späteren Vermessen der Materialbahn mit einem vergleichbaren Verfahren wie dem der Magnet Partikel Spektroskopie, insbesondere nach weiteren Prozessschritten im Herstellungsverfahren, ermittelbar, welcher Suprapartikel oder welcher Suprapartikelcluster an einer bestimmten vermessenen Stelle aufgebracht wurde, und mittels des Zeitstempels nachvollziehbar, zu welchem Zeitpunkt das Suprapartikel oder der Suprapartikelcluster aufgebracht wurde. Somit können für vermessene Bahnabschnitte einer Materialbahn Aussagen über Prozess- oder Umgebungsbedingungen, gewählte Parameter oder Einstellungen zum Zeitpunkt der Verarbeitung des Bahnabschnitts getroffen werden.

Wird beispielsweise ein Bahnabschnitt, der zu einer fehlerhaften Batteriezelle gehört, vermessen, kann so auf ungünstige Prozessbedingungen oder -Einstellungen geschlossen werden.

Es wird somit durch das Aufbringen der Suprapartikel eine Markierung erreicht, die unabhängig von räumlicher Vermessung oder Aufzeichnung räumlicher Koordinaten eine zuverlässige Nachverfolgung von Bahnabschnitten oder Nachvollziehbarkeit von Prozesseigenschaften und deren Auswirkung auf die Materialbahn ermöglicht.

Im Vergleich zu Laserverfahren für die Markierung besteht mit der vorgeschlagenen Lösung keine Gefahr eines zu hohen Temperatureintrags, der die Beschichtung schädigen könnte. Gegenüber Lösungen mit gedruckten Markierungen ist die Haftung der Markierung mit dem vorgeschlagenen Verfahren sehr viel leichter. Es müssen keine passenden Lösungsmittel gesucht werden, um die Haftung sicherzustellen und ein Verwischen des Aufdrucks zu vermeiden.

Im Gegensatz zu Track und Trace an Hand von geometrischen oder topologischen (Oberflächen-) Merkmalen der Beschichtung ist mit dem vorliegenden Verfahren das Identifizieren der Bahnabschnitte durch Messung des magnetischen Moments einer Suprapartikel oder Suprapartikelclusters verhältnismäßig einfach. Vorteilhafterweise entfällt die Schwierigkeit wie bei eingesetzten geometrischen Merkmalen, diese auf den Bahnsegmenten wiederzufinden und mit früher aufgezeichneten Bildern und den zugehörigen Produktionsparametern abzugleichen.

Gemäß einer Ausgestaltung weisen die Suprapartikel der bereitgestellten Anzahl an Suprapartikeln jeweils unterschiedliche charakteristische magnetische Momente in Abhängigkeit von der Anregungsfrequenz auf. Bei einer großen Verfügbarkeit von Suprapartikeln mit jeweils individueller charakteristischer magnetischer Eigenschaft wird so eine sehr einfache Methode geschaffen, die die Markierung eines Bahnabschnitts erlaubt. Es wird vorzugsweise für eine bestimmte Menge zu produzierender Zellstapel eine benötigte Anzahl an Suprapartikeln mit individuellen und voneinander unterscheidbaren magnetischen Eigenschaften ermittelt, insbesondere mittels einer Abschätzung einer benötigten Bahnlänge und einem abgeschätzten räumlichen Abstand der aufgebrachten Partikel. Diese ermittelte Anzahl an Suprapartikeln wird für das Aufbringen eingesetzt. Beispielsweise wiederholt sich der Typ der eingesetzten Suprapartikel, nachdem die so ermittelte Anzahl aufgebraucht wurde.

Gemäß einer Ausgestaltung weisen die Suprapartikelcluster jeweils eine charakteristische Kombination magnetischer Momente in Abhängigkeit von der Anregungsfrequenz auf. Stehen weniger verschiedene Suprapartikeltypen, d.h. Partikel mit sich voneinander unterscheidenden charakteristischen magnetischen Eigenschaften, zur Verfügung, kann durch Kombination einzelner Suprapartikel und Aufbringen in vorgebbarer räumlicher Abfolge ebenfalls ein eindeutiges und durch Messung wiederauffindbares Muster an magnetischen Momenten erstellt werden. Die Markierung wird dann durch die Suprapartikelcluster erreicht. Die Anzahl der voneinander unterscheidbaren Suprapartikel, die in verschiedener Kombination aufgebracht werden, ist vorgebbar und richtet sich beispielsweise nach der Gesamtanzahl benötigter unterscheidbarer Muster. Dies wird beispielsweise durch eine Materialbahnlänge oder die Dauer oder Prozesslänge eines Herstellungsprozesses bestimmt. Zudem ist die Anzahl der nebeneinander aufbringbaren Suprapartikel vorgebbar und wird typischerweise so gewählt, dass der insgesamt benötigte Platz für das Suprapartikelcluster im Verhältnis zu einem späteren Elektrodenzuschnitt passend, insbesondere kleiner ist. Je länger der Zeitraum ist, in dem eine Markierung eindeutig zuordenbar sein soll, desto mehr Partikel werden nebeneinander aufgebracht und/oder desto mehr Partikeltypen werden benötigt.

Gemäß einer Ausgestaltung wird für die Zuordnung magnetischer Momente als Funktion der Anregungsfrequenz zu dem jeweiligen Suprapartikelcluster eine räumliche Abfolge magnetischer Momente innerhalb des Suprapartikelclusters bereitgestellt. Beim Aufbringen ist so sichergestellt, dass voneinander unterscheidbare Suprapartikelcluster verwendet werden. Bereits mit sehr wenigen verfügbaren Suprapartikeln ist so eine große Zahl unterscheidbarer Suprapartikelcluster generierbar, beispielsweise mit 5 Partikeln eine Anzahl von 5⁵ Clustern bei der Bildung von 5er-Clustern. Das räumliche Aufbringen einzelner Suprapartikel innerhalb des Clusters ist dabei steuerbar oder vorgebbar.

Gemäß einer Ausgestaltung werden die Suprapartikel oder Suprapartikelcluster auf eine Aktivmasse einer Elektrodenfolie aufgebracht. Beispielsweise werden die Suprapartikel oder Suprapartikelcluster direkt nach einem Beschichtungsprozess aufgebracht. Beispielsweise werden die Suprapartikel oder Suprapartikelcluster erst nach einem Trocknungsprozess aufgebracht, um ein Eindringen in die Aktivmasse zu verhindern. Im Unterschied zu den etablierten Verfahren können die Suprapartikelcluster auf die Aktivmasse aufgebracht werden, ohne die Beschichtung zu beschädigen.

Gemäß einer Ausgestaltung werden die Suprapartikel oder Suprapartikelcluster auf einen Randbereich oder einen seitlich überstehenden Bereich einer Ableiterfolie aufgebracht. Ein Aufbringen kann so unabhängig von dem Zustand der Aktivmasse erfolgen und die Beschichtung somit besonders wenig beeinflussen. Beispielsweise wird der nicht beschichtbare Randbereich verwendet oder ein extra dafür vorgesehener seitlich überstehender Bereich. Vorteilhafterweise bleibt die Markierung auch dann erhalten, wenn die überstehenden Bereiche der Metallfolie in späteren Prozessschritten abgeschnitten werden.

Gemäß einer Ausgestaltung werden die Suprapartikel oder Suprapartikelcluster vor einem Vereinzeln innerhalb eines Batteriezellproduktionsablaufs, insbesondere vor einem Kalandrieren, insbesondere vor einem Trocknen, aufgebracht. Je früher das Aufbringen im Prozess erfolgt, desto mehr Prozessschritte und deren Konfiguration oder Kenngrößen sind mittels der Markierung überwachbar. Im Falle eines Fehlers in beispielsweise einem Batteriestapel kann dann der Herstellungsprozess ab Aufbringen der Markierung nachvollzogen werden und alle folgenden Prozessschritte, die der markierte Materialbahnabschnitt durchlaufen ist, auf Fehlerquellen hin untersucht werden.

Die Erfindung betrifft ferner ein Verfahren zum Ermitteln von zu einem nach einem der vorstehenden Ansprüche markierten Bahnabschnitt zugehörigen Prozessparametern oder Messdaten, aufweisend folgende Schritte:
- Vermessen der Materialbahn mit einem Messverfahren zur Aufzeichnung des magnetischen Moments als Funktion der Anregungsfrequenz,
- Zuordnen des vermessenen magnetischen Moments zu einem der hinterlegten Zeitstempel.

Die verwendeten Suprapartikel und deren magnetische Eigenschaften sind in der Regel alle bekannt und hinterlegt und im Regelfall wurden alle verwendeten Suprapartikel vor dem Aufbringen vermessen, beispielsweise unter möglichst ähnlichen Bedingungen wie im späteren Betrieb. Bei der Durchführung des hier beschriebenen Verfahrens zum Rückverfolgen markierter Bahnabschnitte erfolgt das Vermessen beispielsweise nur für eine geringe Anzahl der markierten Bahnabschnitte. Insbesondere erfolgt auch das Vermessen der Bahn im Prozess so, dass alle markierten Abschnitte vermessen werden. Das Vermessen erfolgt insbesondere kontinuierlich.

Beispielsweise erfolgt das Vermessen der Materialbahn räumlich nah vor einer Zelle oder einem Zellstapel, insbesondere bei Pouch-Zellen, in dem die Bahnabschnitte gestapelt werden oder vor dem Aufwickeln zu sogenannten "jelly rolls", die in Rundzellen oder prismatischen Zellen verwendet werden.

Beispielsweise wird jeder markierte Bahnabschnitt vermessen und die Messung oder ein daraus zuordenbares Suprapartikel oder Suprapartikelcluster oder ein daraus ableitbarer Zeitstempel oder Zeitpunkt zu der Zelle zugehörig hinterlegt. Zellen werden mit einer Seriennummer versehen und zu dieser Nummer wird beispielsweise der markierte Bahnabschnitt hinterlegt.

Für eine fehlerhafte Zelle ist dann direkt der Produktionszeitpunkt oder Verarbeitungszeitpunkt der zugehörigen Bahnabschnitte ermittelbar.

Insbesondere erfolgt das Hinterlegen der jeweiligen vermessenen magnetischen Momente je Stapel oder je Zelle. Somit können im Fehlerfall die zu einer fehlerhaften Zelle zugehörigen Messungen oder zugehörige Zeitstempel und die zu dem Zeitpunkt vorherrschenden Prozessbedingungen betrachtet und analysiert werden.

Unter dem Vermessen eines magnetischen Moments wird auch das Vermessen mit räumlicher Ausdehnung zur Aufzeichnung mehrerer räumlich auflösbarer Messkurven verstanden, die das magnetische Verhalten der einzelnen Suprapartikel in einem Suprapartikelcluster beschreiben.

Gemäß einer Ausgestaltung wird dem vermessenen magnetischen Moment eines der Suprapartikel aus der Anzahl an Suprapartikeln oder ein Suprapartikelcluster der mehreren Suprapartikelcluster zugeordnet. Beispielsweise wird dafür eine Datenbank wie oben beschrieben nach einer Messkurve oder einer Kombination von Messkurven für die verschiedenen magnetischen Momente je Cluster durchsucht, die der Messkurve oder der Kombination von Kurven des vermessenen markierten Bahnabschnitts ausreichend ähnlich ist oder am Ähnlichsten und anhand dieser ähnlichen oder idealerweise fast identischen Messkurve das zugehörige Suprapartikel oder Suprapartikelcluster erhalten.

Gemäß einer Ausgestaltung wird aus dem zugeordneten Suprapartikel oder Suprapartikelcluster der zugehörige hinterlegte Zeitstempel ermittelt. Dabei muss die Zuordnung des vermessenen magnetischen Moments zum Suprapartikel oder Suprapartikelcluster nicht extra hinterlegt oder dokumentiert werden, sondern es kann lediglich das Resultat des zu einer Messung zugeordneten Zeitstempels ausgegeben werden. Beispielsweise wird die Messung des markierten Bahnabschnitts einem Programm zur Verfügung gestellt, das die Ähnlichkeitsanalyse mit den gespeicherten Messungen der Suprapartikel oder Suprapartikelcluster abgleicht und im nächsten Schritt den zum Suprapartikel oder Suprapartikelcluster zugehörigen Zeitstempel abfragt und ausgibt. Beispielsweise gibt ein derartiges Analysetool zudem auch die Prozessparameter aus, die zum Zeitpunkt des ermittelten Zeitstempels galten.

Gemäß einer Ausgestaltung werden aus dem zugehörigen hinterlegten Zeitstempel zu einem zugehörigen Zeitpunkt geltende oder eingestellte Prozessparameter oder Messdaten ermittelt. Beispielsweise werden alle in einer Anlage möglichen Einstellparameter oder Sensordaten zugehörig zu dem jeweiligen Zeitstempel hinterlegt und auch ausgegeben. In Varianten wird lediglich ein durch einen Nutzer vorgebbarer Teil der Parameter oder Messdaten ausgegeben.

Gemäß einer Ausgestaltung erfolgt das Vermessen der Materialbahn in einem Abstand korrespondierend zu dem vorgebbaren Abstand des Aufbringens. Der Abstand kann ein zeitlicher Abstand sein, falls die Prozessgeschwindigkeit seit dem Aufbringen unverändert ist. Der Abstand kann als räumlicher Abstand ausgebildet sein und geschätzt werden, insbesondere falls sich eine Prozessgeschwindigkeit, beispielsweise durch Prozesse wie vereinzeln, seit dem Aufbringen geändert hat. Falls ein Bereich, in dem die Markierung zu erwarten ist, nicht exakt bestimmbar ist, kann das Vermessen auf einem größeren Bereich erfolgen.

Gemäß einer Ausgestaltung werden in einem Fehlerfall einer Zelle, insbesondere eines Stapels in einer Pouchzelle oder einer Zellwicklung in einer Rundzelle oder prismatischen Zelle, der insbesondere während einer Formierungsphase oder einer Alterungsphase oder einer Testphase auftritt, das oder die zu dem Stapel oder der Zelle zugehörigen vermessenen magnetischen Momente für die Zuordnung des oder der zugehörigen Zeitstempel zugrunde gelegt.

Die Erfindung betrifft ferner eine Markierungsvorrichtung zur Markierung von Bahnabschnitten einer Materialbahn in einem Batteriezellenherstellungsprozess gemäß einer der oben beschriebenen Ausführungen des Verfahrens zur Markierung von Bahnabschnitten.

Die Erfindung betrifft ferner eine Vorrichtung zum Ermitteln von zu einem nach einem der vorstehenden Ansprüche markierten Bahnabschnitt zugehörigen Prozessparametern oder Messdaten gemäß einer der oben beschriebenen Ausführungen des Verfahrens zum Ermitteln von Prozessparametern.

Die Erfindung wird nachfolgend anhand von Ausführungsbeispielen mit Hilfe der Figuren näher erläutert. Es zeigen:
Figur 1 eine schematische Darstellung eines Ausschnitts einer Batteriezellfertigung zur Veranschaulichung des Aufbringens von Suprapartikeln gemäß einem ersten Ausführungsbeispiel;
Figur 2 eine schematische Darstellung eines HMI-Gerätes zur Nutzung eines Analysetools für einen Batterieherstellungsprozess gemäß dem ersten Ausführungsbeispiel;
Figur 3 eine schematische Darstellung eines Behältnisses mit Suprapartikeln zum Aufbringen von Suprapartikelclustern gemäß einem zweiten Ausführungsbeispiel.

In den Figuren sind funktionsgleiche Elemente mit denselben Bezugszeichen versehen, sofern nichts anderes angegeben ist.

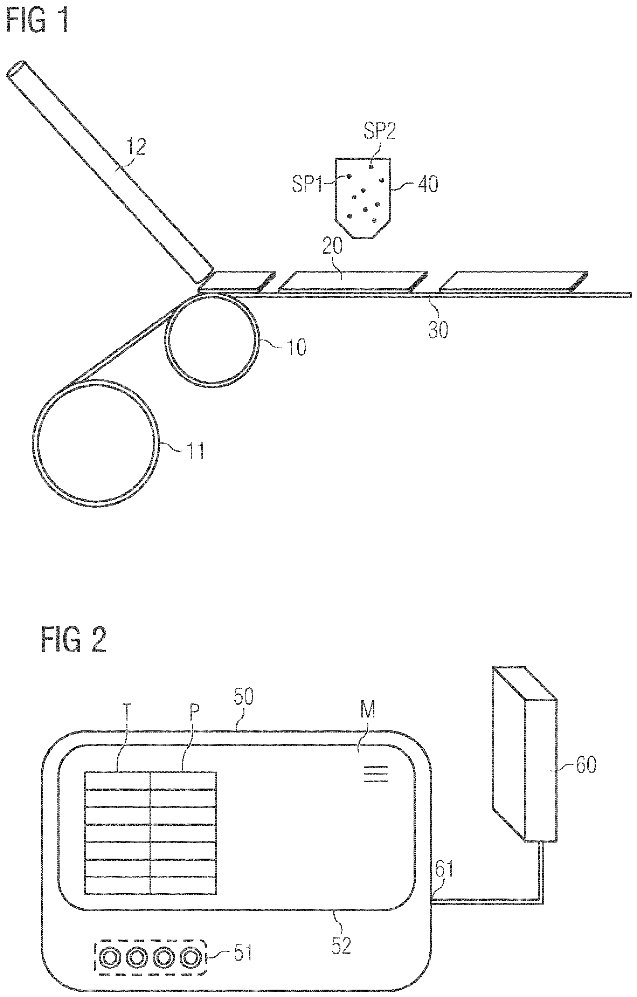

In Figur 1 ist ein Abschnitt einer Batteriezellproduktionslinie abgebildet, in dem Elektrodenmaterial 20, der Elektrodenmaterialslurry, auf eine Materialbahn 30, beispielsweise eine Ableiterfolie, aufgebracht wird. Der Elektrodenmaterialslurry wird von einer Zuführvorrichtung 12, beispielsweise einem Bestandteil eines Mischers oder eines Aufbewahrungscontainers für den Slurry, im Prozess bereitgestellt. Die Materialbahn 20 läuft insbesondere über Umlenkrollen 10 oder Abwickler 11 und wird kontinuierlich im Prozess weiterbefördert und bearbeitet.

Aus einem Behältnis 40 wird eine bekannte Anzahl an jeweils individuellen Suprapartikeln SP1, SP2 bereitgestellt. Individuell sind die Suprapartikel SP1, SP2 insbesondere in Hinblick auf ihre charakteristischen magnetischen Eigenschaften, nämlich auf ein charakteristisches magnetisches Moment als Funktion einer Anregungsfrequenz. Es sind beispielsweise mehrere hundert individuelle Suprapartikel in dem Behältnis 40 verfügbar. Die charakteristischen Eigenschaften kommen durch jeweilige individuelle chemische Zusammensetzungen von Nanopartikeln, die in dem jeweiligen Suprapartikel SP1, SP2 enthaltenen sind, zustande.

Das Behältnis 40 ist mit einem Mechanismus ausgestattet, der gezielt die Ausgabe und das Aufbringen eines Suprapartikels SP1, das mit der zugehörigen magnetischen Charakteristik bekannt ist, zu einem Zeitpunkt ermöglicht, beispielsweise aufgrund einer festen räumlichen Reihenfolge, in der die Suprapartikel SP1, SP2 im Behältnis vorliegen. Dadurch wird ermöglicht, dass ein Datensatz umfassend ein bekanntes und beispielsweise mit einer charakteristischen Kennung versehenes Suprapartikel SP1 gemeinsam mit einem Zeitstempel des erfolgten Aufbringens in einer Datenbank abgelegt wird.

Eine weitere Kennzeichen-Datenbank ist vorgesehen, um ein jeweiliges Suprapartikel SP1 mit der zugehörigen charakteristischen Messkurve, die ein magnetisches Moment abhängig von einer Anregungsfrequenz beschreibt, als Datensatz abzulegen und den Datensatz auf Abfrage bereitzustellen.

Das Behältnis 40 ist vorzugsweise an früher Stelle im Herstellungsprozess vorgesehen, so dass die Suprapartikel in einer Herstellungsphase auf die Folie aufgebracht werden, in der noch möglichst viele der Verarbeitungsschritte bevorstehen. Möglichst spät im Herstellungsprozess, beispielsweise bevor die einzelnen Elektrodenblätter auf einen Stapel für die Ausbildung einer Batteriezelle aufgelegt werden, kann dann der Schritt der Vermessung der einzelnen Blätter erfolgen. So ist beispielsweise für zumindest ein Elektrodenblatt je Stapel, oder mehrere oder alle, eine Messung des charakteristischen magnetischen Moments hinterlegt.

In der Kennzeichen-Datenbank kann zu dem Messergebnis das zugehörige Suprapartikel herausgesucht werden. Beispielsweise wird über ein HMI-Panel, das für die Bedienung einzelner oder mehrerer Maschinen im Herstellungsprozess genutzt wird, ein Zugriff auf ein Datenablagesystem ermöglicht. Dort werden beispielsweise je Zellstapel alle verfügbaren Messkurven erfasst. In einem Fehlerfall, beispielsweise sobald ein Verhalten festgestellt wird, das zu einer Einordnung der Batteriezelle oder des Batteriemoduls als Ausschuss führt, werden die zu dem Stapel zugehörigen Messkurven einem Analysetool übergeben, das ebenfalls über das HMI aufrufbar ist. Beispielsweise bietet das Analysetool ein Bilddatenabgleichprogramm, aus welchem aus den Messkurven an der Anlage annähernd übereinstimmende Messkurven aus der Kennzeichen-Datenbank ermittelt werden sowie die zugehörigen Suprapartikel.

Aus der Angabe, welche Suprapartikel auf den Fehlerfall-Elektrodenblättern aufgebracht sind, kann dann auf den Zeitpunkt anhand der Zeitstempel-Datenbank geschlossen werden. Je nach Umfang des Analysetools wird der Zeitstempel oder eine lokale Zeit angezeigt, zu der Bedingungen in der Anlage vorlagen, die potentiell zu dem vorliegenden Fehler geführt haben. Beispielsweise werden zugleich Schlüssel-Parameter oder Sensordaten, die der Anwender entweder für jeden Fall universell ausgeben lassen kann oder die jedes Mal individuell ausgewählt werden, angezeigt.

So werden in den Maschinen- und Produktionsparametern mögliche Fehlerquellen auffindbar, die temporär vorlagen, als die in der jeweiligen Zelle enthaltenen Abschnitte produziert wurden. Es wird somit eine track and trace-Funktionalität in der Qualitätsüberwachung während der Batteriezellproduktion bereitgestellt.

Figur 2 zeigt schematisch ein HMI-Panel 50, welches eine Schnittstelle 61 aufweist zu einer Steuerung 60, beispielsweise einer Steuerung 60 der Förderbänder, die die zugeschnittenen Elektrodenblätter zu einer Stapelvorrichtung transportieren.

Über das HMI-Panel 50 ist ein Analysetool konfigurierbar, wobei festlegbar ist, welche Aktionen das Analysetool ausführen soll, falls ein Fehlerfall in einem der gebildeten Batteriestapel vorliegt. Beispielsweise wird über ein entkoppeltes Monitoring-System ein Fehlerfall gemeldet und ein Nutzer tätigt am Analysetool über ein Eingabefeld 51 eine Eingabe, die den Fehlerfall anzeigt. In Alternativen sind das Analysetool und das Monitoring-System gekoppelt und der Fehlerfall kann somit durch das Analysetool direkt erkannt werden.

Es wird bei erkanntem Fehlerfall beispielsweise auf dem Display 52 des HMI-Panels ausgegeben, zu welchem Zeitpunkt Elektrodenabschnitte, die in dem fehlerhaften Batteriezellstapel verarbeitet wurden, erstmals in einem Bearbeitungsschritt in dem Batterieherstellungsverfahren erfasst wurden. Beispielsweise wird eine Zeitspanne angezeigt, in der die in dem Stapel befindlichen Zuschnitte der Elektrodenbahn den Bearbeitungsprozess durchlaufen haben.

Genauer wird aus der Angabe des Stapels, in dem der Fehler aufgetreten ist, auf die zugehörigen Messungen geschlossen und anhand der hinterlegten Messkurven wird das zugehörige Suprapartikel und der Zeitpunkt, zu dem dieses aufgebracht wurde, ausgelesen und optional ausgegeben.

Beispielsweise wurde das Analysetool in einer Konfigurationsphase über das Display derart konfiguriert, dass neben den zeitlichen Angaben T direkt Anlagenparameter P, die während dieser Zeit vorlagen, am Display 52 im Fehlerfall angezeigt werden. Beispielsweise sind die konfigurierten Einstellungen über ein Menü jederzeit am Display einsehbar und anpassbar.

Beispielsweise zeigt das Display 52 zudem eine Visualisierung des Prozesses an mit entsprechenden Markierungen von Bereichen in der Herstellungsprozesskette, an welchen eine Fehlerquelle zu vermuten ist, beispielsweise alle Prozessschritte, die in der Kette nach einer erfolgten Markierung liegen. Beispielsweise können so die Herstellungsbedingungen nachvollzogen werden, die zu dem Zeitpunkt der Herstellung der Fehler-Elektrodenzuschnitte vorlagen und Fehlerquellen identifiziert werden. Beispielsweise werden Änderungen im Vergleich zu den Bedingungen in einer vorherigen Zeitspanne und einer darauffolgenden Zeitspanne analysiert und es kann gezielt getestet werden, ob die geänderten Parameter eine Auswirkung auf die Herstellungsqualität haben.

In Varianten ist das Analysetool in einen Industrie-PC integriert. In vielen modernen industriellen Anwendungen werden IPCs verwendet, weil sie robust sind und eine hohe Rechenleistung sowie Flexibilität bieten. Sie können verschiedene HMI-Softwarelösungen ausführen, die den Bedienern ermöglichen, Prozesse zu überwachen, Daten zu visualisieren und Eingaben zu machen, die an die Steuerungssysteme weitergeleitet werden. Beispielsweise ist der IPC für die Prozessvisualisierung vorgesehen und verfügt über entsprechende Anbindung an Simulationssoftware, die auch durch das Analysetool genutzt werden kann, beispielsweise zu Zwecken der Visualisierung von Fehlerquellen.

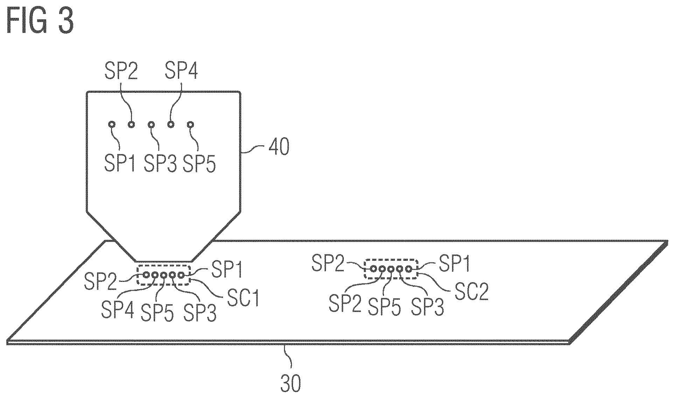

Ein zweites Ausführungsbeispiel ist anhand von Figur 3 illustriert. Zur Markierung der Elektrodenbahnabschnitte werden Cluster SC1, SC2 aus Suprapartikeln SP1, SP2, SP3, SP4, SP5 mit bekannten charakteristischen magnetischen Eigenschaften aufgebracht. Es wird eine Anzahl von fünf verschiedenen Partikeln zu 5er-Gruppen von Partikelclustern SC1, SC2 kombiniert und die Partikelart und deren Position räumlich aufgelöst in der Gruppe gemessen. Die einzelnen Suprapartikel SP1, SP2, SP3, SP4, SP5 und deren Reihenfolge im Cluster sind somit hinsichtlich ihrer magnetischen Eigenschaften unterscheidbar. Einzelne Suprapartikel SP1, SP2, SP3, SP4, SP5 können insbesondere je Suprapartikelcluster SC1, SC2 mehrfach aufgebracht werden.

Ein räumlich aufgelöst messbares magnetisches Moment ist für ein einzelnen Suprapartikel SP1, SP2, SP3, SP4, SP5 charakteristisch und aufgrund der räumlichen Unterscheidbarkeit der Position im Cluster SC1, SC2 erhält man bei den beispielsweise angenommenen fünf Suprapartikeltypen und der Bildung von Fünfer-Clustern 5^5 = 3125 Kombinationen, die entlang der Elektrodenbahn platziert werden können. Dadurch kann mit vertretbarem Syntheseaufwand für die wenigen Suprapartikeltypen trotzdem eine ausreichende Zahl von Markierungspunkten entlang der Elektrodenrolle erreicht werden.

So werden die Bahnsegmente in praxisrelevanten Abschnitten, beispielsweise mit einem Abstand kleiner 1m, auf einer insgesamt kilometerlangen Rolle mit vertretbarem Aufwand bei der Herstellung der verschiedenen Suprapartikel mit unterschiedlichen charakteristischen magnetischen Momenten markiert.

## Patentansprüche

1. Verfahren zur Markierung von Bahnabschnitten einer Materialbahn (30) in einem Batteriezellenherstellungsprozess, aufweisend die folgenden Schritte:
- Bereitstellen einer Anzahl an Suprapartikeln (SP1, SP2, SP3, SP4, SP5), wobei die jeweiligen Suprapartikel (SP1, SP2, SP3, SP4, SP5) ein definiertes und für das jeweilige Suprapartikel (SP1, SP2, SP3, SP4, SP5) charakteristisches magnetisches Moment als Funktion einer Anregungsfrequenz aufweisen abhängig von einer chemischen Zusammensetzung von in dem jeweiligen Suprapartikel (SP1, SP2, SP3, SP4, SP5) enthaltenen Nanopartikeln,
- Aufbringen der bereitgestellten Anzahl an Suprapartikeln (SP1, SP2, SP3, SP4, SP5) auf die Materialbahn (30), wobei die Suprapartikel (SP1, SP2, SP3, SP4, SP5) oder mehrere Suprapartikelcluster (SC1, SC2) bestehend aus mehreren Suprapartikeln (SP1, SP2, SP3, SP4, SP5) der bereitgestellten Anzahl an Suprapartikeln (SP1, SP2, SP3, SP4, SP5) in einem vorgebbaren Abstand aufgebracht werden,
- Bereitstellen einer jeweiligen Zuordnung des magnetischen Moments als Funktion der Anregungsfrequenz zu dem jeweiligen Suprapartikel (SP1, SP2, SP3, SP4, SP5) oder einer jeweiligen Zuordnung magnetischer Momente als Funktion der Anregungsfrequenz zu dem jeweiligen Suprapartikelcluster (SC1, SC2),
- Hinterlegen eines Zeitstempels zugehörig zu den aufgebrachten Suprapartikeln (SP1, SP2, SP3, SP4, SP5) oder Suprapartikelclustern (SC1, SC2).

2. Verfahren nach Anspruch 1, wobei die Suprapartikel (SP1, SP2, SP3, SP4, SP5) der bereitgestellten Anzahl an Suprapartikeln (SP1, SP2, SP3, SP4, SP5) jeweils unterschiedliche charakteristische magnetische Momente in Abhängigkeit von der Anregungsfrequenz aufweisen.

3. Verfahren nach Anspruch 1 oder 2, wobei die Suprapartikelcluster (SC1, SC2) jeweils eine charakteristische Kombination magnetischer Momente in Abhängigkeit von der Anregungsfrequenz aufweisen.

4. Verfahren nach einem der vorstehenden Ansprüche, wobei für die Zuordnung magnetischer Momente als Funktion der Anregungsfrequenz zu dem jeweiligen Suprapartikelcluster (SC1, SC2) eine räumliche Abfolge magnetischer Momente innerhalb des Suprapartikelclusters (SC1, SC2) bereitgestellt wird.

5. Verfahren nach einem der vorstehenden Ansprüche, wobei die Suprapartikel (SP1, SP2, SP3, SP4, SP5) oder Suprapartikelcluster (SC1, SC2) auf eine Aktivmasse (20) einer Elektrodenfolie aufgebracht werden.

6. Verfahren nach einem der vorstehenden Ansprüche, wobei die Suprapartikel (SP1, SP2, SP3, SP4, SP5) oder Suprapartikelcluster (SC1, SC2) auf einen Randbereich oder einen seitlich überstehenden Bereich einer Ableiterfolie aufgebracht werden.

7. Verfahren nach einem der vorstehenden Ansprüche, wobei die Suprapartikel (SP1, SP2, SP3, SP4, SP5) oder Suprapartikelcluster (SC1, SC2) vor einem Vereinzeln innerhalb eines Batteriezellproduktionsablaufs, insbesondere vor einem Kalandrieren, insbesondere vor einem Trocknen, aufgebracht werden.

8. Verfahren zum Ermitteln von zu einem nach einem der vorstehenden Ansprüche markierten Bahnabschnitt zugehörigen Prozessparametern oder Messdaten, aufweisend folgende Schritte:
- Vermessen der Materialbahn (30) mit einem Messverfahren zur Aufzeichnung des magnetischen Moments als Funktion der Anregungsfrequenz,
- Zuordnen des vermessenen magnetischen Moments zu einem der hinterlegten Zeitstempel.

9. Verfahren nach Anspruch 8, wobei dem vermessenen magnetischen Moment eines der Suprapartikel (SP1, SP2, SP3, SP4, SP5) aus der Anzahl an Suprapartikeln (SP1, SP2, SP3, SP4, SP5) oder ein Suprapartikelcluster (SC1, SC2) der mehreren Suprapartikelcluster (SC1, SC2) zugeordnet wird.

10. Verfahren nach Anspruch 9, wobei aus dem zugeordneten Suprapartikel (SP1, SP2, SP3, SP4, SP5) oder Suprapartikelcluster (SC1, SC2) der zugehörige hinterlegte Zeitstempel ermittelt wird.

11. Verfahren nach einem der Ansprüche 8 bis 10, wobei aus dem zugehörigen hinterlegten Zeitstempel zu einem zugehörigen Zeitpunkt geltende oder eingestellte Prozessparameter oder Messdaten ermittelt werden.

12. Verfahren nach einem der Ansprüche 8 bis 11, wobei das Vermessen der Materialbahn in einem Abstand korrespondierend zu dem vorgebbaren Abstand des Aufbringens erfolgt.

13. Verfahren nach einem der Ansprüche 8 bis 12, wobei in einem Fehlerfall einer Zelle, insbesondere eines Stapels in einer Pouchzelle oder einer Zellwicklung in einer Rundzelle oder prismatischen Zelle, der insbesondere während einer Formierungsphase oder einer Alterungsphase oder einer Testphase auftritt, das oder die zu der Zelle zugehörigen vermessenen magnetischen Momente für die Zuordnung des oder der zugehörigen Zeitstempel zugrunde gelegt werden.

14. Markierungsvorrichtung zur Markierung von Bahnabschnitten einer Materialbahn in einem Batteriezellenherstellungsprozess gemäß einem der Verfahrensansprüche 1 bis 7.

15. Vorrichtung zum Ermitteln von zu einem nach einem der vorstehenden Ansprüche markierten Bahnabschnitt zugehörigen Prozessparametern oder Messdaten gemäß einem der Verfahrensansprüche 8 bis 13.
